# EUROPÄISCHE PATENTSCHRIFT

(11) **EP 4 054 919 B1**
(45) Veröffentlichungstag und Bekanntmachung des Hinweises auf die Patenterteilung: **28.12.2022**
(21) Anmeldenummer: 21819027.0
(22) Anmeldetag: 18.11.2021
(51) Int. Cl.: B62D 5/00

(54) **LENKSYSTEM FÜR EIN FAHRZEUG**
STEERING SYSTEM FOR A VEHICLE
DIRECTION POUR VÉHICULE

(30) Priorität: 17.12.2020 DE 102020133969
(43) Veröffentlichungstag der Anmeldung: 14.09.2022
(73) Patentinhaber: softwareinmotion GmbH, 73614 Schorndorf (DE)
(72) Erfinder: KAFFENBERGER, Rüdiger, 71522 Backnang (DE); RIEK, Kai, 74423 Obersontheim (DE)
(74) Vertreter: Müller, Gottfried
(86) Internationale Anmeldenummer: PCT/EP2021/025450
(87) Internationale Veröffentlichungsnummer: WO 2022/128146

(56) Entgegenhaltungen:
- DE-A1-102017 207 272
- DE-A1-102019 204 069
- US-A1- 2009 224 500
- US-A1- 2017 361 867
- US-A1- 2018 141 585

## Beschreibung

Die Erfindung bezieht sich auf ein Lenksystem für ein Fahrzeug, mit einer Lenkhandhabe zum manuellen Aufbringen eines Lenkwinkels, mit einem Lenkwinkelsensor zur Erfassung des Lenkwinkels und mit einem Lenkgetriebe zur Umsetzung des Lenkwinkels in einen Radlenkwinkel.

Bekannte Lenksysteme für Fahrzeuge weisen eine Lenksäule, ein Lenkgetriebe, ein Lenkgestänge sowie einen elektrischen Servomotor zur Erzeugung einer unterstützenden Kraft auf. Über ein Lenkrad gibt der Fahrer einen Lenkwinkel vor, der über die kinematische Kette von Lenksäule, Lenkgetriebe, Lenkgestänge in einen Radlenkwinkel der lenkbaren Räder umgesetzt wird. Ein derartiges Lenksystem wird beispielsweise in der DE 10 2010 062 577 A1 beschrieben.

Die DE 10 2019 202 294 A1 offenbart ein Steer-by-Wire-Lenksystem, wobei die Lenksäule des Lenksystems mit dem Sonnenrad eines Planetengetriebes verbunden ist.

Die DE 10 2016 105 964 A1 offenbart ein Lenksystem mit mechanischem Durchgriff über die Lenkwelle, die mit einem Lenkgetriebe gekoppelt ist. Die Lenkwelle ist mit einem Sonnenrad drehfest verbunden, mit dem zwei Planetenräder unterschiedlicher Zähnezahl kämmen, denen jeweils ein Planetenradlagesensor zugeordnet ist. Die unterschiedliche Zähnezahl der Planetenräder ermöglicht nach dem Nonius-Prinzip auch nach einem Batteriespannungsverlust allein aus der aktuellen Winkelposition der Planetenräder auf den aktuellen Lenkwinkel zu schließen, ohne dass hierfür eine Neuinitialisierung erforderlich ist.

Die CN 101603807 A offenbart ein konventionelles Lenksystem, bei dem die Lenkwelle mit dem Sonnenrad eines Planetengetriebes gekoppelt ist. Am Sonnenrad sowie am Außenrad sind jeweils zwei um 90° zueinander versetzte Hall-Sensoren zur Drehwinkelermittlung der betreffenden Räder angeordnet.

Aus der DE 10 2017 207 272 A1 ist eine Lenkungshandhabe zur Eingabe eines fahrerseitigen Lenkbefehls in eine Steer-by-wire-Fahrzeuglenkung bekannt, die einen drehbar gelagerten Grundkörper zur Betätigung durch den Fahrer umfasst. An dem Grundkörper ist eine Aufnahme ausgebildet, in welcher ein Planetengetriebe angeordnet ist. Das Sonnenrad bildet ein Eingangsglied des Getriebes, das mit einem Elektromotor koppelbar ist. Das Außenrad bildet ein Ausgangsglied des Getriebes, das mit dem Grundkörper gekoppelt ist.

Die DE 10 2019 204 069 A1 offenbart die folgenden Merkmale des Anspruchs 1: ein Lenksystem für ein Fahrzeug, mit einer Lenkhandhabe zum manuellen Aufbringen eines Lenkwinkels mit einem Lenkgetriebe zur Umsetzung des Lenkwinkels in einen Radlenkwinkel an einem oder mehreren lenkbaren Rädern des Fahrzeugs, wobei das Lenksystem mit einem Planetengetriebe versehen ist, das mit der Lenkhandhabe gekoppelt ist, mit einem Sonnenrad und einem Planetenträger, wobei das Lenksystem als ein Steer-by-Wire-Lenksystem ohne mechanische oder hydraulische Kopplung zwischen der Lenkwelle der Lenkhandhabe und dem Lenkgetriebe ausgeführt ist und das Außenrad mit einem Aktuator zum Aufbringen eines Moments auf die Lenkhandhabe verbunden ist.

Zum weiteren Stand der Technik wird auf die Druckschriften US 2017/361867 A1 und US 2009/224500 A1 verwiesen.

Der Erfindung liegt die Aufgabe zugrunde, ein kompakt bauendes, konstruktiv einfach aufgebautes Lenksystem für ein Fahrzeug anzugeben.

Diese Aufgabe wird erfindungsgemäß mit den Merkmalen des Anspruches 1 gelöst. Die Unteransprüche geben zweckmäßige Weiterbildungen an.

Das erfindungsgemäße Lenksystem kann in Fahrzeugen eingesetzt werden, insbesondere in motorisierten Fahrzeugen, um über ein manuelles Aufbringen eines Lenkwinkels einen gewünschten Radlenkwinkel an einem oder mehreren lenkbaren Rädern des Fahrzeugs zu erzeugen. Das Lenksystem ist in an sich bekannter Weise mit einer Lenkhandhabe ausgeführt, über die der Fahrer manuell den Lenkwinkel aufbringt, und außerdem mit einem Lenkwinkelsensor zur Erfassung des Lenkwinkels. Das Lenksystem umfasst des Weiteren ein Lenkgetriebe zur Umsetzung des manuellen Lenkwinkels in den Radlenkwinkel.

Das Lenksystem ist mit einem Planetengetriebe versehen, das mit der Lenkhandhabe gekoppelt ist, indem eine Lenkwelle, welche mit der Lenkhandhabe verbunden ist und den gleichen Lenkwinkel wie die Lenkhandhabe ausführt, mit dem Sonnenrad des Planetengetriebes verbunden ist. Der Signalgeber des Lenkwinkelsensors ist mit einem Planetenrad verbunden. Das Außenrad, welches drehbar gelagert ist und sich bei einer Lenkbewegung dreht, stützt die Wellen von Sonnenrad und den Planetenrädern gegen radiale Kräfte, verringert das Getriebespiel und verteilt die Kräfte gleichmäßig auf die Zahnräder.

Soweit die Begriffe "Radialrichtung" bzw. "radial" und "Axialrichtung" bzw. "axial" verwendet werden, beziehen sich diese auf die Längsachse des Sonnenrades des Planetengetriebes, zu der die Drehachsen der Planetenräder und des Außenrades parallel verlaufen.

Diese Ausführung mit Verwendung eines Planetengetriebes im Lenksystem weist verschiedene Vorteile auf. Zum einen ist eine kompakte Ausführung des Lenksystems gegeben, da das Planetengetriebe als kompakte Baueinheit ausgeführt ist, die insbesondere in unmittelbarer Nähe zur Lenkhandhabe angeordnet werden kann. Bei dem Planetengetriebe handelt es sich um eine Standardbaueinheit, die keiner besonderen Anpassung an das Lenksystem bedarf.

Mittels des Planetengetriebes ist in einfacher Weise eine Anpassung an den jeweiligen Einsatzzweck möglich. Dies erfolgt einerseits dadurch, dass die Lenkwelle der Lenkhandhabe mit dem Sonnenrad verbunden wird. Bei einer Verbindung mit dem Sonnenrad sind mehrere Lenkumdrehungen bis zum Erreichen eines maximalen Lenkeinschlags möglich; diese Ausführung eignet sich insbesondere für Zweispurfahrzeuge wie Personenkraftwagen, Nutzfahrzeuge, landwirtschaftliche Fahrzeuge oder Baufahrzeuge. In dieser Ausführung ist die Lenkhandhabe als ein Lenkrad ausgebildet.

Je nach Einsatzzweck können außerdem unterschiedliche Planetengetriebe verwendet werden, die mit verschiedenen, an den Einsatzzweck angepassten Getriebeübersetzungen versehen sind.

Über die Verbindung des Lenkwinkelsensors mit einem drehbaren Rad des Planetengetriebes ist in einfacher Weise eine funktionale Kopplung von Sensor und Lenksystem möglich. Vorteilhaft ist es außerdem, dass für eine redundante Auslegung mehrere Lenkwinkelsensoren mit jeweils einem Planetenrad des Planetengetriebes verbunden werden können. Hierdurch erhält man eine erhöhte Ausfallsicherheit und eine höhere Zuverlässigkeit bei der Erfassung des vom Fahrer erzeugten Lenkwinkels.

Bei dem Lenksystem handelt es sich um ein Steer-by-Wire-Lenksystem ohne mechanische oder hydraulische Kopplung zwischen der Lenkwelle der Lenkhandhabe und dem Lenkgetriebe. In dieser Ausführung besteht vorteilhafterweise eine Datenverbindung zwischen dem Lenkwinkelsensor und einem das Lenkgetriebe verstellenden Getriebeaktuator. Die Sensorinformationen des Lenkwinkelsensors werden über die Datenverbindung auf den Getriebeaktuator übertragen, der einen dem Lenkwinkel entsprechenden Radlenkwinkel über die Beaufschlagung des Lenkgetriebes einstellt. Insbesondere in Kombination mit mehreren Lenkwinkelsensoren, die jeweils mit einem Planetenrad des Planetengetriebes gekoppelt sind, wird aufgrund der Redundanz eine hinreichend hohe Ausfallsicherheit im Steer-by-Wire-Lenksystem erreicht.

Die Datenverbindung wird entweder kabellos mit einem Sender im Lenkwinkelsensor und einem Empfänger im Getriebeaktuator oder über Kabel durchgeführt oder mithilfe einer Datenleitung zwischen Lenkwinkelsensor und dem Empfänger im Getriebeaktuator. Der Getriebeaktuator ist vorteilhafterweise als elektrischer Servomotor ausgeführt.

Das Lenksystem ist mit einem Aktuator zum Aufbringen eines Moments auf die Lenkhandhabe ausgestattet. Der Aktuator ist zu diesem Zweck mit dem Außenrad des Planetengetriebes verbunden. Es ist kann beispielsweise zweckmäßig sein, mehrere Planetenräder mit jeweils einem Lenkwinkelsensor zu verbinden; in dieser Ausführung ist die Lenkwelle der Lenkhandhabe mit dem Sonnenrad gekoppelt. Über den Aktuator kann ein der Lenkbewegung, welcher der Fahrer erzeugt, entgegengesetztes Moment in der Lenkhandhabe generiert werden, um zum einen ein natürliches Lenkgefühl wie bei herkömmlichen Lenksystemen herzustellen und zum anderen die Lenkbewegung von der aktuellen Fahrzeug- und Umgebungssituation abhängig zu machen. So ist es beispielsweise möglich, das von dem Aktuator erzeugte Moment, welches in der Lenkhandhabe spürbar ist, von Fahrzeugzustandsgrößen abhängig zu machen, beispielsweise von der Fahrzeuggeschwindigkeit, der Querbeschleunigung oder dem Radschlupf. So ist es insbesondere möglich, mit steigender Fahrzeuggeschwindigkeit ein höheres Moment über den Aktuator zu erzeugen, um einen beruhigenden, dämpfenden Effekt auf Lenkbewegungen des Fahrers bei höheren Geschwindigkeiten einzustellen. Der Aktuator ermöglicht es außerdem, eine autonome Lenkfunktion zu realisieren, indem die Einstellung des Lenkwinkels unabhängig vom Fahrer über den Aktuator durchgeführt wird. Bei dem Aktuator handelt es sich insbesondere um einen Elektromotor.

Es kann gegebenenfalls zweckmäßig sein, zusätzlich zu dem vom Fahrer vorgegebenen Lenkwinkel auch das vom Fahrer erzeugte Lenkmoment zu erfassen, was ebenfalls sensorisch erfolgt. Die Lenkmomenterfassung kann beispielsweise über den Aktuator durchgeführt werden, indem der Verlauf des Stroms, mit dem der elektrisch betätigbare Aktuator beaufschlagt wird, ausgewertet wird, wobei ein Stromanstieg auf einen entsprechenden Anstieg des Moments schließen lässt. Dies lässt sich insbesondere in der Ausführung des Aktuators als elektrischer Servomotor realisieren. Alternativ ist es auch möglich, das Lenkmoment über einen gesonderten Sensor an der Lenkwelle zu erfassen.

Gemäß einer weiteren vorteilhaften Ausführung ist das Außenrad als Dose oder Topf ausgebildet und umgreift die Planetenräder sowie das Sonnenrad sowohl in Radialrichtung als auch in Axialrichtung. Das radiale und axiale Übergreifen der Planetenräder und des Sonnenrades durch das Außenrad schützt die Zahnräder des Planetengetriebes und schirmt diese gegen Verschmutzung ab.

Gemäß noch einer weiteren vorteilhaften Ausführung umfasst das Planetengetriebe eine Grundplatte, an der das Gehäuse eines oder mehrerer Lenkwinkelsensoren und gegebenenfalls des Aktuators befestigt sind. An der Grundplatte kann außerdem das Sonnenrad drehbar gelagert werden. Die Grundplatte befindet sich insbesondere an der offenen Stirnseite des dosenförmigen Außenrades, so dass eine vollständige Umschließung der Zahnräder des Planetengetriebes von dem dosenförmigen Außenrad und der Grundplatte gegeben ist.

Das Außenrad ist drehbar gelagert, vorteilhafterweise auf der Lenkwelle der Lenkhandhabe. Zur Realisierung einer Lenksperre kann es zweckmäßig sein, das Außenrad mechanisch zu blockieren. Aufgrund der kinematischen Übertragung zwischen den Zahnrädern einschließlich des Außenrades ist bei Blockierung des Außenrades eine Lenkbewegung unmöglich.

Die Erfindung bezieht sich auf ein Zweispurfahrzeug wie ein Nutzfahrzeug oder ein Personenkraftwagen mit einem vorbeschriebenen Lenksystem, wobei die Lenkhandhabe als Lenkrad ausgebildet ist, dessen Lenkwelle mit dem Sonnenrad des Planetengetriebes verbunden ist.

Die Erfindung bezieht sich des Weiteren auf ein Verfahren zur Betätigung eines vorbeschriebenen Lenksystems, wobei der Lenkwinkel sensorisch erfasst und an einen Getriebeaktuator übertragen wird, der ein Lenkgetriebe zum Umsetzen des Lenkwinkels in einen Radlenkwinkel an den lenkbaren Rädern einstellt. Ein Aktuator, der im oder am Planetengetriebe angeordnet ist, kann in vorteilhafter Weiterbildung des Verfahrens als Funktion sensorisch erfasster Umgebungs- und Zustandsgrößen angesteuert werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Steer-by-Wire-Lenksystems in einem Fahrzeug,
- Fig. 2: eine Darstellung eines Lenkgetriebes, das über einen Servomotor ansteuerbar ist, welcher in Abhängigkeit von Lenkwinkelinformationen ansteuerbar ist,
- Fig. 3: eine Draufsicht auf ein Planetengetriebe des Lenksystems, wobei die Lenkwelle des Lenkrades mit dem Sonnenrad, die Signalgeber von insgesamt drei Lenkwinkelsensoren mit jeweils einem Planetenrad und ein Aktuator mit einem weiteren Planetenrad verbunden sind,
- Fig. 4: das Planetengetriebe in Seitenansicht.

In den Figuren sind gleiche Bauteile mit gleichen Bezugszeichen versehen.

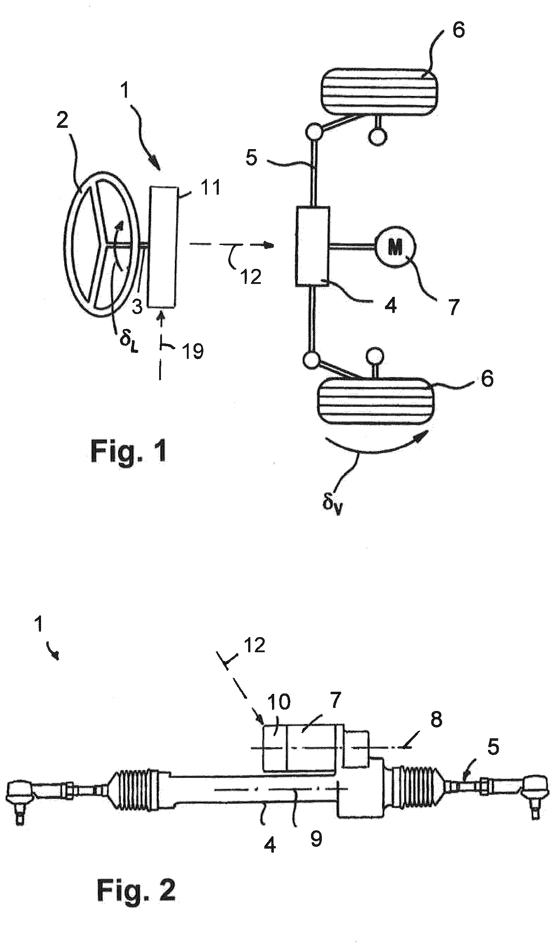

In Fig. 1 ist ein Steer-by-Wire-Lenksystem 1 dargestellt, das eine Lenkhandhabe in Form eines Lenkrads 2 an einer Lenkwelle 3 umfasst, außerdem ein Lenkgetriebe 4 mit einer Zahnstange 5 zur Verstellung von lenkbaren Vorderrädern 6 und einen elektrischen Servomotor 7, über den ein Moment zur Erzeugung einer gewünschten Lenkbewegung mit einem Radlenkwinkel δ_{V} erzeugt werden kann. Der Fahrer gibt über das Lenkrad 2 einen Lenkwinkel δ_{L} vor, der über die fest mit dem Lenkrad 2 verbundene Lenkwelle 3 in ein Planetengetriebe 11 übertragen wird.

Aufgrund der Ausführung eines Steer-by-Wire-Lenksystems 1 gibt es keine mechanische oder hydraulische Verbindung zwischen dem Lenkrad 2 und dem Planetengetriebe 11 einerseits und dem Lenkgetriebe 4 andererseits. Die Umsetzung des Lenkwinkels δ_{L} in einen entsprechenden Radlenkwinkel δ_{V} erfolgt über eine Datenverbindung 12, über die Lenkwinkel-Sensorinformationen von einem Lenkwinkelsensor, der in das Planetengetriebe 11 integriert ist, auf ein Steuergerät 10 des elektrischen Servomotors 7 übertragen werden (Fig. 2). In dem Steuergerät 10 wird auf der Grundlage der empfangenen Lenkwinkel-Sensorinformationen der elektrische Servomotor 7 in der Weise angesteuert, dass ein entsprechender Radlenkwinkel δ_{V} eingestellt wird. Die Stellbewegung des elektrischen Servomotors 7, dessen Motorlängsachse 8 parallel zur Längsachse 9 der Zahnstange 5 verläuft, wird auf das Lenkgetriebe bzw. die Zahnstange übertragen. Auf diese Weise lässt sich ohne mechanische oder hydraulische Verbindung zwischen Lenkrad 2 und Lenkgetriebe 4 der gewünschte Radlenkwinkel δ_{V} einstellen.

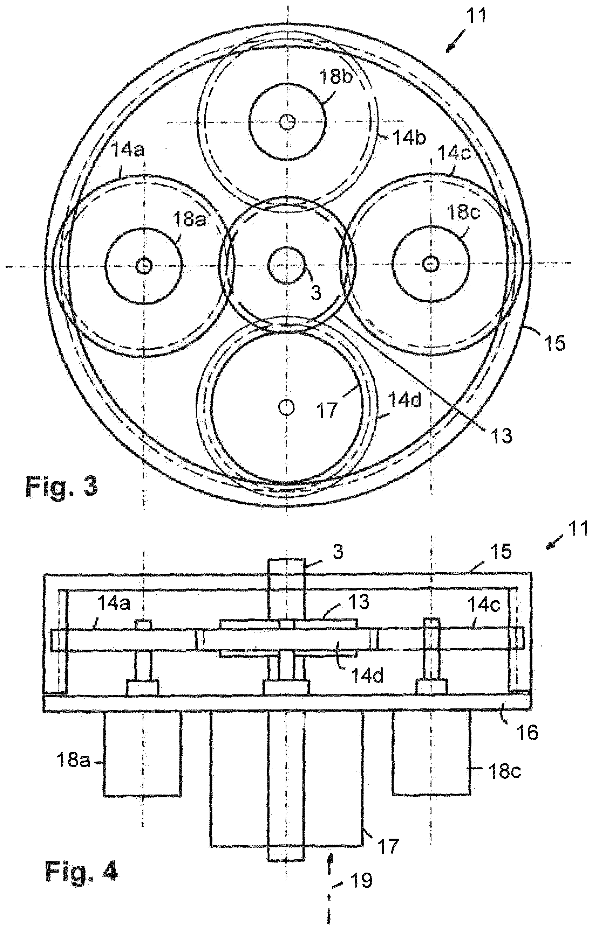

In den Fig. 3 und 4 ist das Planetengetriebe 11 im Detail dargestellt. Das Planetengetriebe 11 umfasst ein Sonnenrad 13, insgesamt vier Planetenräder 14a bis 14d und ein Außenrad 15 sowie eine Grundplatte 16. Das Sonnenrad 13 ist mit der Lenkwelle 3 des Lenkrads fest verbunden. Das Außenrad 15, an dem die Planetenräder 14a bis 14d abrollen, welche zugleich von dem Sonnenrad 13 angetrieben werden, kann sich um seine Drehachse drehen. Die drei Planetenräder 14a, 14b und 14c sind jeweils mit einem Lenkwinkelsensor 18a, 18b bzw. 18c verbunden. Das vierte Planetenrad 14d ist mit einem Aktuator 17 verbunden, der als elektrischer Servomotor ausgeführt ist.

Das Außenrad 15 ist topf- bzw. dosenförmig ausgebildet und umgreift das Sonnenrad 13 sowie die Planetenräder 14 radial und axial. Die offene Seite des topfförmigen Außenrades 15 ist von der ortsfest gehaltenen Grundplatte 16 abgedeckt, an der das Sonnenrad 13 sowie die Planetenräder 14a bis 14d drehbar gelagert sind. Das Außenrad 15 ist an der Lenkwelle 3 drehbar gelagert.

Die Grundplatte 16, die sich auf der dem Lenkrad abgewandten Seite befindet, ist auf ihrer Außenseite Träger des Gehäuses der Lenkwinkelsensoren 18 sowie des Aktuators 17. Die Lenkwinkelsensoren 18 umfassen außerdem jeweils einen Signalgeber, der drehfest mit dem jeweiligen Planetenrad 14 verbunden ist. Der Aktuator 17 ist mit seinem Gehäuse und Stator an der Grundplatte 16 gehalten, wobei der Rotor des Aktuators 17 mit dem Planetenrad 14d verbunden ist und dieses antreibt.

Der Aktuator 17 empfängt über eine Datenverbindung 19 (Fig. 1, 4) Zustands- und Umfeldinformationen aus einer Sensorik im Fahrzeug, beispielsweise die Fahrzeuglängsgeschwindigkeit und die Fahrzeugquerbeschleunigung. In Abhängigkeit von den empfangenen Zustands- und Umfeldinformationen wird der Aktuator 17 angesteuert und kann ein Moment einspeisen, das der vom Fahrer erzeugten Lenkbewegung entgegengerichtet ist. Auf diese Weise ist es möglich, in Abhängigkeit der Zustands- und Umfeldinformationen dem Fahrer ein vertrautes Lenkgefühl zu vermitteln, trotz der fehlenden mechanischen oder hydraulischen Verbindung zwischen Lenkrad 2 und Lenkgetriebe 4.

Der Aktuator 17 kann gegebenenfalls auch dazu verwendet werden, eine autonome Lenkfunktion zu realisieren. In diesem Fall übernimmt der Aktuator 17 die Einstellung des Lenkwinkels δ_{L}, unabhängig vom Fahrer. Das vom Aktuator 17 erzeugte Lenkmoment ist vorteilhafterweise so bemessen, dass der Fahrer die Lenkvorgabe durch den Aktuator 17 überstimmen kann und dem Lenkrad seinen gewünschten Lenkwinkel aufprägen kann.

## Patentansprüche

1. Lenksystem für ein Fahrzeug, mit einer Lenkhandhabe (2) zum manuellen Aufbringen eines Lenkwinkels, mit einem Lenkwinkelsensor (18) zur Erfassung des Lenkwinkels (δ_{L}) und mit einem Lenkgetriebe (4) zur Umsetzung des Lenkwinkels (δ_{L}) in einen Radlenkwinkel (δ_{V}) an einem oder mehreren lenkbaren Rädern (6) des Fahrzeugs,
wobei das Lenksystem mit einem Planetengetriebe versehen ist, das mit der Lenkhandhabe (2) gekoppelt ist, indem eine mit der Lenkhandhabe (2) verbundene Lenkwelle (3) mit dem Sonnenrad (13) des Planetengetriebes (11) verbunden ist, wobei das
Lenksystem als ein Steer-by-Wire-Lenksystem ohne mechanische oder hydraulische Kopplung zwischen der Lenkwelle (3) der Lenkhandhabe (2) und dem Lenkgetriebe (4) ausgeführt ist,
wobei mindestens zwei Planetenräder (14) des Planetengetriebes (11) mit Lenkwinkelsensoren (18) verbunden sind und wobei das Außenrad (15) des Planetengetriebes (11) mit einem Aktuator (17) zum Aufbringen eines Moments auf die Lenkhandhabe (2) verbunden ist.

2. Lenksystem nach Anspruch 1, **gekennzeichnet durch** eine Datenverbindung (12, 19) zwischen dem Lenkwinkelsensor (18) und einem das Lenkgetriebe (4) verstellenden Getriebeaktuator (7).

3. Lenksystem nach Anspruch 1 oder 2,
**dadurch gekennzeichnet,**
**dass** das Außenrad (15) als Dose ausgebildet ist und die Planetenräder (14) sowie das Sonnenrad (13) radial und axial umgreift.

4. Lenksystem nach einem der Ansprüche 1 bis 3,
**dadurch gekennzeichnet,**
**dass** das Planetengetriebe (11) eine Grundplatte (16) umfasst, an der das Gehäuse eines oder mehrerer Lenkwinkelsensoren (18) und gegebenenfalls des Aktuators (17) befestigt sind.

5. Lenksystem nach Anspruch 3 und 4,
**dadurch gekennzeichnet,**
**dass** die Grundplatte (16) an der offenen Stirnseite des dosenförmigen Außenrads (15) angeordnet ist.

6. Lenksystem nach einem der Ansprüche 1 bis 5,
**dadurch gekennzeichnet,**
**dass** das Außenrad (15) auf der Lenkwelle (3) der Lenkhandhabe (2) drehbar gelagert ist.

7. Lenksystem nach einem der Ansprüche 1 bis 6,
**dadurch gekennzeichnet,**
**dass** zur Realisierung einer Lenksperre das Außenrad (15) blockierbar ist.

8. Zweispurfahrzeug mit einem Lenksystem (1) nach einem der Ansprüche 1 bis 7, wobei die Lenkhandhabe (2) als Lenkrad ausgebildet ist, dessen Lenkwelle (3) mit dem Sonnenrad (13) des Planetengetriebes (11) verbunden ist.

9. Verfahren zur Betätigung eines Lenksystems (1) nach einem der Ansprüche 1 bis 7, wobei der Lenkwinkel, mit dem die Lenkhandhabe (2) betätigt wird, sensorisch erfasst und an einen Getriebeaktuator (7) übertragen wird, der ein Lenkgetriebe (4) zum Umsetzen des Lenkwinkels (δ_{L}) in einen Radlenkwinkel (δ_{V}) an den lenkbaren Rädern (6) einstellt.

10. Verfahren nach Anspruch 9,
**dadurch gekennzeichnet,**
**dass** ein Aktuator (17) im Planetengetriebe (11) als Funktion sensorisch erfasster Umgebungs- und Zustandsgrößen angesteuert wird.

## Claims

1. Steering system for a vehicle, with a steering handle (2) for the manual application of a steering angle, with a steering angle sensor (18) for the detection of the steering angle (δ_{L}) and with a steering gear (4) for the conversion of the steering angle (δ_{L}) into a wheel steering angle (δ_{V}) at one or more steerable wheels (6) of the vehicle, the steering system being provided with a planetary gear mechanism which is coupled to the steering handle (2), by a steering shaft (3) which is connected to the steering handle (2) being connected to the sun gear (13) of the planetary gear mechanism (11), the steering system being configured as a steer-by-wire steering system without mechanical or hydraulic coupling between the steering shaft (3) of the steering handle (2) and a steering gear (4), at least two planetary gears (14) of the planetary gear mechanism (11) being connected to steering angle sensors (18), and the outer gear (15) of the planetary gear mechanism (11) being connected to an actuator (17) for the application of a torque to the steering handle (2).

2. Steering system according to Claim 1, **characterized by** a data connection (12, 19) between the steering angle sensor (18) and a gear actuator (7) which adjusts the steering gear (4).

3. Steering system according to Claim 1 or 2, **characterized in that** the outer gear (15) is configured as a socket and engages radially and axially around the planetary gears (14) and the sun gear (13).

4. Steering system according to one of Claims 1 to 3, **characterized in that** the planetary gear mechanism (11) comprises a base plate (16), to which the housing of one or more steering angle sensors (18) and possibly of the actuator (17) are fastened.

5. Steering system according to Claims 3 and 4, **characterized in that** the base plate (16) is arranged on the open end side of the socket-shaped outer gear (15).

6. Steering system according to one of Claims 1 to 5, **characterized in that** the outer gear (15) is mounted rotatably on the steering shaft (3) of the steering handle (2).

7. Steering system according to one of Claims 1 to 6, **characterized in that** the outer gear (15) can be blocked in order to realise a steering lock.

8. Double-track vehicle with a steering system (1) according to one of Claims 1 to 7, the steering handle (2) being configured as a steering wheel, the steering shaft (3) of which is connected to the sun gear (13) of the planetary gear mechanism (11).

9. Method for actuating a steering system (1) according to one of Claims 1 to 7, the steering angle, with which the steering handle (2) is actuated, being detected by sensor and being transmitted to a gear actuator (7) which sets a steering gear (4) for the conversion of the steering angle (δ_{L}) into a wheel steering angle (δ_{V}) at the steerable wheels (6).

10. Method according to Claim 9, **characterized in that** an actuator (17) in the planetary gear mechanism (11) is actuated as a function of ambient and state variables which are detected by sensor.

## Revendications

1. Système de direction pour un véhicule, comprenant une commande manuelle de direction (2) servant à l'application manuelle d'un angle de braquage, comprenant un capteur d'angle de braquage (18) servant à la détection de l'angle de braquage (δ_{L}) et comprenant un mécanisme de direction (4) servant à la conversion de l'angle de braquage (δ_{L}) en un angle de braquage de roue (δ_{V}) au niveau d'une ou plusieurs roues (6) orientables du véhicule, le système de direction étant doté d'une transmission planétaire qui est accouplée à la commande manuelle de direction (2), par le fait qu'un arbre de direction (3) relié à la commande manuelle de direction (2) est relié à la roue planétaire (13) de la transmission planétaire (11), le système de direction étant réalisé sous la forme d'un système de direction à commande électrique (« steer-by-wire ») sans accouplement mécanique ou hydraulique entre l'arbre de direction (3) de la commande manuelle de direction (2) et le mécanisme de direction (4), au moins deux roues satellites (14) de la transmission planétaire (11) étant reliées à des capteurs d'angle de braquage (18) et la roue extérieure (15) de la transmission planétaire (11) étant reliée à un actionneur (17) servant à l'application d'un couple sur la commande manuelle de direction (2).

2. Système de direction selon la revendication 1, **caractérisé par** une liaison de transmission de données (12, 19) entre le capteur d'angle de braquage (18) et un actionneur de mécanisme (7) réglant le mécanisme de direction (4).

3. Système de direction selon la revendication 1 ou 2, **caractérisé en ce que**
la roue extérieure (15) est réalisée sous forme de boîte et entoure radialement et axialement les roues satellites (14) ainsi que la roue planétaire (13).

4. Système de direction selon l'une des revendications 1 à 3,
**caractérisé en ce que**
la transmission planétaire (11) comprend une plaque de base (16) sur laquelle le boîtier d'un ou plusieurs capteurs d'angle de braquage (18) et éventuellement de l'actionneur (17) sont fixés.

5. Système de direction selon les revendications 3 et 4,
**caractérisé en ce que**
la plaque de base (16) est disposée au niveau du côté frontal ouvert de la roue extérieure (15) en forme de boîte.

6. Système de direction selon l'une des revendications 1 à 5,
**caractérisé en ce que**
la roue extérieure (15) est montée rotative sur l'arbre de direction (3) de la commande manuelle de direction (2) .

7. Système de direction selon l'une des revendications 1 à 6,
**caractérisé en ce que**
la roue extérieure (15) peut être bloquée pour la réalisation d'un blocage de direction.

8. Véhicule à deux voies comprenant un système de direction (1) selon l'une des revendications 1 à 7, la commande manuelle de direction (2) étant réalisée sous forme de volant de direction dont l'arbre de direction (3) est relié à la roue planétaire (13) de la transmission planétaire (11).

9. Procédé d'actionnement d'un système de direction (1) selon l'une des revendications 1 à 7, l'angle de braquage, suivant lequel la commande manuelle de direction (2) est actionnée, étant détecté par capteur et étant transmis à un actionneur de mécanisme (7) qui règle un mécanisme de direction (4) servant à la conversion de l'angle de braquage (δ_{L}) en un angle de braquage de roue (δ_{V}) au niveau des roues (6) orientables.

10. Procédé selon la revendication 9,
**caractérisé en ce**
**qu'**un actionneur (17) dans la transmission planétaire (11) est commandé en fonction de grandeurs d'environnement et d'état détectées par capteur.
